# EUROPEAN PATENT SPECIFICATION

(11) **EP 3 252 201 B1**
(45) Date of publication and mention of the grant of the patent: **17.04.2019**
(21) Application number: 17173366.0
(22) Date of filing: 30.05.2017
(51) Int. Cl.: D06F 33/02, D06F 37/22, D06F 37/24

(54) **WASHING MACHINE AND CONTROL METHOD THEREOF**
WASCHMASCHINE UND STEUERUNGSVERFAHREN DAFÜR
MACHINE À LAVER ET SON PROCÉDÉ DE COMMANDE

(30) Priority: 31.05.2016 KR 20160066903
(43) Date of publication of application: 06.12.2017
(73) Proprietor: LG Electronics Inc., Yeongdeungpo-gu Seoul 07336 (KR)
(72) Inventor: KIM, Kyunghoon, Seoul 08592 (KR)
(74) Representative: Vossius & Partner Patentanwälte Rechtsanwälte mbB

(56) References cited:
- EP-A1- 2 520 700
- WO-A1-2011/025319
- WO-A2-2011/025324

## Description

The present disclosure relates to a washing machine and a control method, and particularly, to a method for controlling a spin-drying operation of a washing machine.

In a drum type washing machine, a tub is horizontally disposed and a drum is also horizontally disposed therein. Laundry is placed within the drum and tumbled to be washed as the drum rotates.

The tub serves to accommodate washing water, and the drum is where laundry is placed to be washed. The drum is rotatably installed within the tub.

A rotational shaft is connected to a rear side of the drum and receives rotary power from a motor. Thus, when the motor rotates, rotary power of the motor is transmitted to the drum through the rotational shaft to rotate the drum.

The drum rotates when laundry is rinsed and spin-dried, as well as when laundry is washed, and here, the drum vibrates, while being rotated.

The rotational shaft penetrates through a rear surface of the tub and protrudes to the outside of the tub. In the related art washing machine, a bearing housing may be inserted into the rear surface of the tub through insert molding. Or, the bearing housing may be fastened to a rear wall of the tub.

The rotational shaft is supported by the bearing housing, and vibration of the drum is transmitted to the bearing housing and the tub through the rotational shaft.

Thus, the tub vibrates together with the drum, and in order to buffer such vibration, a buffer support member is connected to the tub.

That is, the related art washing machine has a structure in which vibration of the drum is transmitted to the tub as is, and such vibration is supported by the buffer support member connected to the tub.

When laundry is off-balance within the drum to form an unbalanced mass during a spin-dry operation of the washing machine, noise due to vibrations of the drum is increased.

In order to solve such a problem, a ball balancer is provided in a portion of the drum. The ball balancer is installed on a front side or a rear side of the drum and may include at least one ball rotating in the vicinity of the drum.

The ball balancer moves in a direction opposite to a direction in which the laundry is off-balance in relation to the center of the drum during rotation of the drum, in particular, during a spin-dry operation in which the drum rotates at a high speed, thus compensating for mass unbalance occurring within the drum. In this manner, the ball balancer may suppress generation of vibrations of the drum.

However, since the ball present within the ball balancer is not fixated but freely moves within the ball balancer according to rotation of the drum, the ball is not always present in an ideal position.

That is, in a general washing machine, a movement direction or a movement distance of the ball or a relative position of the ball in relation to a direction in which laundry is off-balance cannot be adjusted within the ball balancer, causing a problem that unbalanced mass of the drum is aggravated by the ball balancer or unbalanced mass cannot be compensated.

Thus, in order to effectively utilize the ball balancer installed in the drum, a washing machine capable of adjusting a position of a ball and a control method thereof are required.

WO 2011/025319 A1 discloses a method of controlling the rotation speed of a drum in a washing machine. The method includes the steps of sensing vibration of a drum, determining whether or not a transient region has been passed when the sensed vibration of the drum is at a present level or higher, and controlling the rotation speed of the drum according to the determined result.

Therefore, an aspect of the detailed description is to provide a washing machine in which a position of a ball within a ball balancer is controlled, and a control method thereof.

Another aspect of the detailed description is to provide a washing machine in which unbalanced mass due to off-balance laundry within a drum is reduced, and a control method thereof.

Another aspect of the detailed description is to provide a washing machine in which noise generated when unbalanced mass is formed within a drum during a spin-dry operation is reduced, and a control method thereof.

Another aspect of the detailed description is to provide a washing machine in which a ball within a ball balancer is moved to an optimal position using previously accumulated experimental data, and a control method thereof.

Another aspect of the detailed description is to provide a washing machine in which a relative position of a ball in relation to a direction in which an unbalanced mass is formed within a drum is recognized during a spin-dry operation, and a control method thereof.

Another aspect of the detailed description is to provide a washing machine in which noise is reduced without deforming a design of the washing machine aiming at reducing a maximum speed of a drum, and a control method thereof.

To achieve these and other advantages and in accordance with the purpose of this specification, as embodied and broadly described herein, a washing machine includes: a drum; a vibration sensor sensing vibration of the drum; a ball balancer installed in a portion of the drum and including at least one ball; and a controller controlling a rotation speed of the drum, wherein the controller detects information related to an eccentric amount within the drum and a position of the ball using a signal related to vibration of the drum obtained from the vibration sensor for a preset period of time, while maintaining a rotation speed of the drum, selects an acceleration pattern corresponding to the detected eccentric amount and position of the ball from a preset table, and rotates the drum according to the selected acceleration pattern, wherein the controller may rotate the drum according to the selected acceleration pattern such that the ball is positioned in a direction opposite to an eccentric direction of a washing target within the drum, and the preset table is stored in the washing machine.

According to an embodiment related to the present disclosure, the selected acceleration pattern may relate to at least one of a timing at which the drum starts to accelerate, acceleration of the drum, and a timing at which acceleration of the drum is changed.

According to an embodiment related to the present disclosure, the signal related to vibration of the drum may be formed as a sine wave.

According to an embodiment related to the present disclosure, the controller may detect information related an eccentric amount using an average value of a maximum value and a minimum value of the sine wave.

According to an embodiment related to the present disclosure, the controller may detect information related to a relative position of the ball regarding an eccentric direction of the washing target within the drum on the basis of a phase of the sine wave.

According to an embodiment related to the present disclosure, when the detected eccentric amount is greater than a reference eccentric amount, the controller may stop the drum.

According to an embodiment related to the present disclosure, after the drum is stopped the controller may control a rotation speed of the drum to perform a laundry distribution operation to distribute washing target within the drum.

According to an embodiment related to the present disclosure, when the laundry distribution operation terminates, the controller may control a rotation speed of the drum to perform a spin-dry operation.

According to an embodiment related to the present disclosure, after the spin-dry operation starts, when a rotation speed of the drum reaches a first speed value, the controller may compare a vibration value sensed by the vibration sensor with a first reference vibration value, and when the sensed vibration value is smaller than the reference vibration value, the controller may increase the rotation speed of the drum to a maximum speed.

According to an embodiment related to the present disclosure, when the sensed vibration value is equal to or greater than the first vibration value, the controller may reduce the rotation speed of the drum from the first speed value to a second speed value, and obtain a signal related to vibration of the drum from the vibration sensor for a preset period of time, while maintaining the rotation speed of the drum at the second speed value.

According to an embodiment related to the present disclosure, when the sensed vibration value is equal to or greater than a second vibration value, the controller may stop the drum and resume the spin-dry operation.

According to an embodiment related to the present disclosure, the second reference vibration may be greater than the first reference vibration value.

According to an embodiment related to the present disclosure, the controller may detect a rotation speed of the drum and a vibration value sensed by the vibration sensor at a plurality of timings during a spin-dry operation, calculate a variation rate of the vibration value regarding the rotation speed using the detected rotation speed and vibration value, and control a rotation speed of the drum on the basis of the calculated variation rate.

According to an embodiment related to the present disclosure, when the calculated variation rate exceeds a reference variation value, the controller may reduce a rotation speed of the drum to detect an eccentric amount within the drum.

According to an embodiment related to the present disclosure, the controller may reduce a rotation speed of the drum and detect information related to the eccentric amount and a position of the ball in the reduced rotation speed of the drum.

According to an embodiment related to the present disclosure, while rotating the drum according to a preset pattern, the controller may detect information related to the eccentric amount and a position of the ball and update the table according to the detected information.

As an example useful for understanding the invention, a method for controlling a washing machine including a drum, a vibration sensor sensing vibration of the drum, and a ball balancer installed in a portion of the drum and including at least one ball, may include: obtaining a signal related to vibration of the drum from the vibration sensor for a preset period of time, while a rotation speed of the drum is maintained; detecting information related to an eccentric amount within the drum and a position of the ball using the obtained signal related to vibration of the drum, selecting an acceleration pattern corresponding to the detected eccentric amount and position of the ball from a preset table, and rotating the drum according to the selected acceleration pattern.

As an example useful for understanding the invention, a method for controlling a washing machine including a drum, a vibration sensor sensing vibration of the drum, and a ball balancer installed in a portion of the drum and including at least one ball, may include: entering a spin-dry operation; sensing an output from the vibration sensor, while a rotation speed of the drum is gradually increased; when a rotation speed of the drum reaches a first speed value, determining whether the sensed output exceeds a reference vibration value; when the sensed output exceeds the reference vibration value, reducing a rotation speed of the drum to a second speed value; obtaining a signal related to vibration of the drum from the vibration sensor for a preset period of time, while a rotation speed of the drum is maintained at the second speed value; detecting information related to an eccentric amount within the drum and a position of the ball using the obtained signal related to vibration of the drum; selecting an acceleration pattern corresponding to the detected eccentric amount and position of the ball from a preset table; and rotating the drum according to the selected acceleration pattern.

According to an embodiment related to the present disclosure, the method may further include: resuming the spin-dry operation after rotating the drum according to the selected acceleration pattern.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a cross-sectional view illustrating a general washing machine.
FIG. 2 is a conceptual view illustrating an embodiment of a washing machine according to the present disclosure.
FIG. 3 is a cross-sectional view illustrating an embodiment of a washing machine according to the present disclosure.
FIGS. 4A and 4B are conceptual views illustrating an embodiment of a ball balancer included in a washing machine according to the present disclosure.
FIG. 5 is a graph illustrating a rotation speed of a drum in a spin-dry operation of a general washing machine.
FIG. 6A is a graph illustrating a rotation speed of a drum in a spin-dry operation of a washing machine according to the present disclosure.
FIG. 6B is a graph illustrating a vibration signal related to a ball balancer during a spin-dry operation of a washing machine according to the present disclosure.
FIG. 6C is a graph illustrating a method for controlling a rotation speed of a drum to control a position of a ball within a ball balancer during a spin-dry operation of a washing machine according to the present disclosure.
FIGS. 7A and 7B are graphs illustrating a method for controlling a rotation speed of a drum to control a position of a ball according to a relative position of the ball with respect to an unbalanced mass of a drum during a spin-dry operation of a washing machine according to the present disclosure.
FIGS. 8 and 9 are graphs illustrating a method for controlling a rotation speed of a drum to resolve an unbalanced mass of a drum during a spin-dry operation of a washing machine according to the present disclosure.
FIG. 10 is a flow chart illustrating a method for controlling a washing machine according to the present disclosure.

Hereinafter, embodiments of the present disclosure will be described in detail with reference to the accompanying drawings. Here, the terminology used herein is for the purpose of describing particular embodiments only and is not intended to be limiting of the invention. Unless otherwise defined, all terms used herein have the same meaning as commonly understood by one of ordinary skill in the art to which this invention pertains, and should not be interpreted as having an excessively comprehensive meaning nor as having an excessively contracted meaning. If technical terms used herein is erroneous that fails to accurately express the technical idea of the present invention, it should be replaced with technical terms that allow the person in the art to properly understand. The general terms used herein should be interpreted according to the definitions in the dictionary or in the context and should not be interpreted as an excessively contracted meaning.

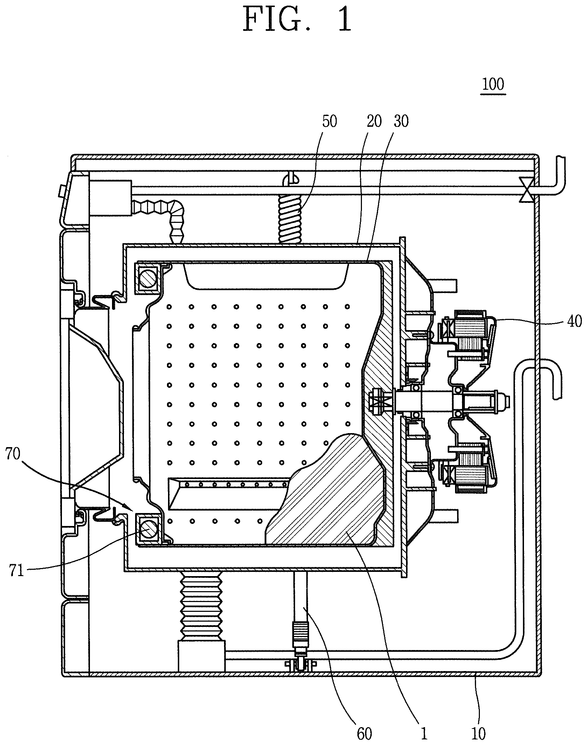

The related art washing machine will be described with reference to FIG. 1.

A washing machine 100 may include a cabinet 10 forming an appearance, a tub 20 provided within the cabinet 10 and accommodating washing water, and a drum 30 rotatably provided within the tub 20.

The cabinet 10 forms an appearance of the washing machine 100, and various components described hereinafter may be installed in the cabinet 1'0.

A door 12 is provided on a front side of the cabinet 10, and a user may open the door 12 and introduce a washing target (laundry) to the inside of the cabinet 10.

The tub 20 accommodating washing water is provided within the cabinet 10, and the drum 30 accommodating the washing target may be rotatably provided on an inner side of the tub 20. Here, a plurality of lifters 32 lifting the washing target and dropping the same downwards when the drum 30 rotates may be provided on an inner side of the drum 30.

The tub 20 is supported by an upper spring 50. A driving motor 40 rotating the drum is installed on a rear surface of the tub 20. That is, the driving motor 40 is provided on a rear wall of the tub 20 to rotate the drum 30. Thus, when the drum 30 vibrates as the driving motor 40 rotates the drum 30, the tub 20 also vibrates in conjunction with the drum 3. Vibrations generated in the drum 30 and the tub 20 when the drum 30 rotates are absorbed by an upper spring 50, or the like.

In order to compensate for unbalance that occurs when the drum 30 rotates, a ball balancer 70 may be provided on a front side and/or a rear side of the drum 30. When the drum rotates, in particular, when the drum rotates at a high speed during a spin-dry operation, the ball balancer 70 serves to compensate for unbalance to suppress generation of vibrations. Theoretically, the ball balancer 70 serves to compensate for unbalance, but it may be difficult for the bal balancer 70 to effectively play such a role in every operational state of the washing machine, and thus, it is required to design and control the ball balancer 70 such that the ball balancer 70 effectively functions.

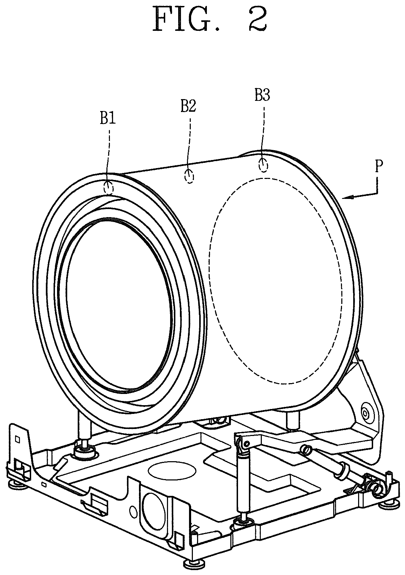

Referring to FIG. 2, a washing machine according to the present disclosure may have a plurality of ball balancers.

In detail, the washing machine 100 may include at least one of a first ball balancer B1 disposed at a front portion of the drum 30, a second ball balancer B2 disposed at a middle portion of the drum 30, and a third ball balancer B3 disposed on a rear portion of the drum 30.

AS illustrated in FIG. 2, the washing machine 100 may include a vibration sensor P installed on a rear side of the drum 30.

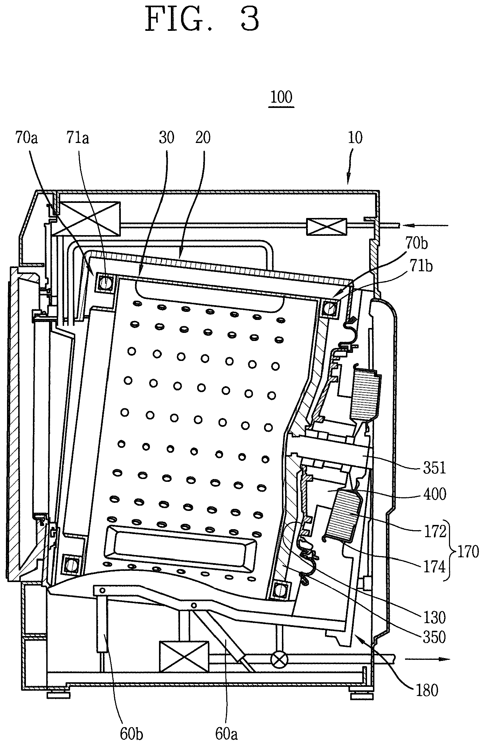

Referring to FIG. 3, in the washing machine, the tub 20 is fixated to and supported by the cabinet.

The drum 30 includes a drum front, a drum center, a drum back, and the like. Also, ball balancers 70a and 70b are installed at a front portion and a rear portion of the drum, respectively.

A spider 350 is connected to a rotational shaft 351. The drum 30 rotates within the tub 20 by a rotational force transmitted through the rotational shaft 351.

The rotational shaft 351 is connected to a motor 170 through a tub back 130 in a direct connection manner. In detail, a rotor 174 of the motor 170 and the rotational shaft 351 are directly connected.

A bearing housing 400 rotatably supports the rotational shaft 351 between the motor 170 and the tub back 130.

A stator 172 is fixated to and installed in the bearing housing 400. Also, a rotor 174 is positioned to surround the stator 172. As described above, the rotor 174 is directly connected to the rotational shaft 351. The motor 170 is an outer rotor type motor and directly connected to the rotational shaft 351.

The bearing housing 400 is supported from a bottom of the cabinet 10 through a suspension unit 180. The suspension unit 180 includes three vertical supports and two sloped supports slopingly supporting with respect to a forward/backward direction.

The suspension unit 180 may include a cylinder damper 60a and a cylinder spring 60b. The suspension unit 180 may be provided to allow elastic deformation to a degree to allow movement of the drum in forward/backward and leftward/rightward directions. That is, the suspension unit 180 is elastically supported to allow rotation to a degree forwards/backwards and leftwards/rightwards regarding a support point connected to a bottom of the cabinet 10.

A vertically installed suspension may be configured to elastically buffer vibrations of the drum and a slantingly installed suspension may be configured to damp vibrations of the drum. That is, in a vibrometer including a spring and a damping unit, a vertically installed suspension may be configured to serve as a spring and a slantingly installed suspension may be configured to serve as a damping unit.

The tub front and the tub rear are fixated to and installed in the cabinet 110 and buffered and supported by the suspension unit 180. Substantially, a support structures of the tub 12 and the drum 32 may be a separated form, and also, the tub 12 does not vibrate although the drum 32 vibrates.

The bearing housing 400 and suspension brackets are connected by a first weight and a second weight (not shown).

In the washing machine according to the embodiments described above, when a washing target 1 is accommodated within the drum 30 and the drum 30 rotates, significant noise and vibrations may occur depending on a position of the washing target 1.

For example, when the drum 30 rotates (hereinafter, referred to as "eccentric rotation") in a state in which washing target 1 is not evenly distributed, significant vibrations and noise may occur. In particular, in cases where a spin-dry operation is performed to accelerate the drum 30 at a high speed for spin-drying, vibrations and noise may be problematic.

Thus, in order to prevent vibrations and noise due to eccentric rotation of the drum 30, the washing machine may have at least one ball balancers 70, 70a, and 70b. As for the ball balancers 70, 70a, and 70b, one ball balancer may be provided on a front side or a rear side of the drum 30 or may be provided on both the front side and the rear side, respectively. Also, as illustrated in FIG. 2, the ball balancers 70, 70a, and 70b may be provided on a front side, a central side, and a rear side of the drum 30, respectively.

The ball balancer 70 is installed in the rotary drum 30 to serve to reduce eccentricity. Thus, the ball balancer 70 may be configured such that the center of gravity is variably moved. That is, the ball balancer 70 includes balls 71, 71a, 71b having a predetermined weight therein, and may be configured to include a path along which the balls are movable in a circumferential direction. Also, one ball balancer may include a plurality of balls.

In detail, the balls rotate by frictional force when the drum 30 rotates. When the drum rotates, the balls are not restrained by the drum, and thus, the balls rotate at a speed different from that of the drum.

However, the washing target generating eccentricity is tightly attached to an inner wall of the drum and rotates at a speed which is substantially the same as that of the drum due to a sufficient frictional force and lifting of the inner wall of the drum. Thus, a rotation speed of the washing target and a rotation of the balls are different. As a result, a rotation speed of the washing target is higher than a rotation speed of the balls at an initial stage of rotation at a relatively low speed at which the drum starts to rotate. More accurately, a rotation angular velocity may be fast. Also, a phase difference between the ball and the washing target, i.e., a phase difference of the drum with respect to a rotation center continuously changes.

When the rotation speed of the drum is increased, balls are tightly attached to an outer circumferential surface of a movement path due to a centrifugal force. Ideally, the balls are aligned in a position at which a phase difference from the washing target is about 180°.

When the rotation speed of the drum is at least a predetermined value, the centrifugal force is increased and a frictional force between the circumferential surface and the balls is at least a predetermined value so that the balls rotate at the same rotation speed as that of the drum. Here, the balls rotate at the same speed as that of the drum, while maintained at a position at which a phase difference from the washing target is about 180°, preferably.

In the present disclosure, for the purposes of description, the case where the balls rotate at a predetermined position of the drum will be referred to as an "eccentricity corresponding position" or "being ball balanced".

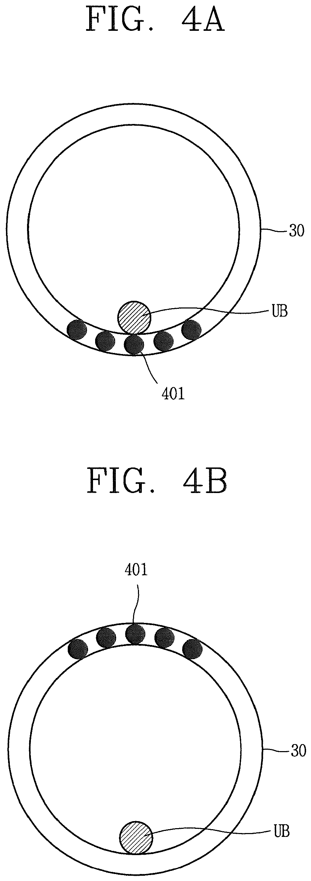

In this connection, referring to FIG. 4A, when a lopsided position of the washing target within the drum and a position of the balls 401 within the ball balancer correspond to each other, an unbalanced mass UB of the drum is maximized.

Meanwhile, referring to FIG. 4B, in cases where a position in which the washing target is lopsided within the drum and a position of the balls 401 within the ball balancer are opposite to each other with respect to the center of the drum, unbalancing due to the washing target is compensated for, minimizing the unbalanced mass UB of the drum. That is, when a load based on the washing target is eccentric to one side within the drum 30, balls within the ball balancer 70 may move to an eccentric corresponding position to reduce eccentricity.

Hereinafter, a method for controlling washing machines having the aforementioned configuration will be described. The washing machine includes a washing operation, a rinsing operation, and a spin-dry operation, and in the control method according to the present disclosure, in particular, the spin-dry operation will be described in detail with reference to the accompanying drawings.

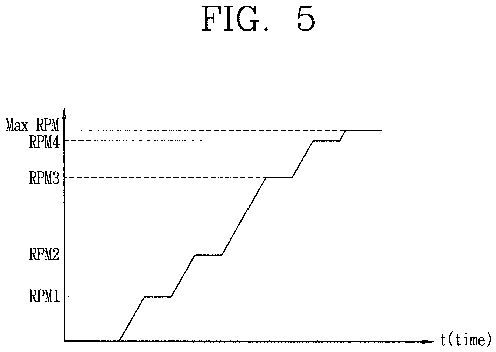

First, a change in a rotation speed of the drum when the general washing machine performs a spin-dry operation will be described with reference to FIG. 5.

As illustrated in FIG. 5, a controller of the washing machine performing a spin-dry operation may gradually increase a rotation speed of the drum.

In detail, when the washing machine enters the spin-dry operation, the controller of the washing machine may increase a rotation speed of the drum to a first RPM (RPM 1) value and subsequently maintain the rotation speed of the drum for a predetermined period of time.

Also, the controller of the washing machine may increase a rotation speed of the drum from the first RPM (RPM 1) value to a second RPM (RPM 2) value and subsequently maintain the rotation speed of the drum for a predetermined period of time. Similarly, the controller may sequentially increase the rotation speed of the drum to a third RPM (RPM 3) value and a fourth RPM (RPM 4) value.

In this manner, the controller may control the rotation speed of the drum to reach a maximum rotation speed (Max RPM) in terms of design. Accordingly, in the spin-dry operation, moisture of the washing target is removed by rotating the drum in a relatively high speed.

Meanwhile, in cases where the drum rotates with the washing target placed therein, an unbalanced mass may be generated by the washing target. That is, when the washing target is not evenly distributed within the drum but lopsided to one side, vibrations of the drum may be increased during a spin-dry operation, and thus, it is preferred to reduce the unbalanced mass (UB) as small as possible. In particular, as a rotation speed of the drum is increased, a natural frequency region of the washing machine meets, and here, when the unbalanced mass is large, an amount of vibrations may be too large.

Thus, before entering the spin-dry operation illustrated in FIG. 5, the washing machine 100 may perform a laundry distribution operation (not shown).

The controller of the washing machine 100 may control a rotation speed of the drum to perform a laundry distribution operation to evenly distribute the washing target within the drum, while rotating the drum at a relatively low speed.

When the laundry distribution operation is performed, the controller may detect a wet laundry amount within the drum. The reason for detecting a wet laundry amount is because, even though an amount of washing target not wet at an initial stage, i.e., a dry laundry amount, is detected, a weight of laundry containing moisture is different from a weight of dry laundry.

For example, in order to measure a wet laundry amount within the drum 30, the controller of the washing machine 100 may accelerate the drum 30 at about 100 to 110 RPM to perform a steady operation for a predetermined period of time, and decelerate the drum 30.

Here, in order for the controller to decelerate the drum 30, dynamic braking of the motor connected to the drum 30 is used. That is, the controller may detect a wet laundry amount within the drum using an acceleration section rotation amount at the time of accelerating the driving motor 170 rotating the drum 30, a deceleration section rotation amount at the time of decelerating the driving motor 170, applied motor DC power, and the like.

After detecting the wet laundry amount, the controller may control a rotation speed of the drum 30 to perform a laundry untangling operation to distribute laundry within the drum 30. In detail, the controller may increase a rotation speed of the drum 30 in one direction until the rotation speed reaches a predetermined speed, in a state in which the drum 30 is tilted at a predetermined slope.

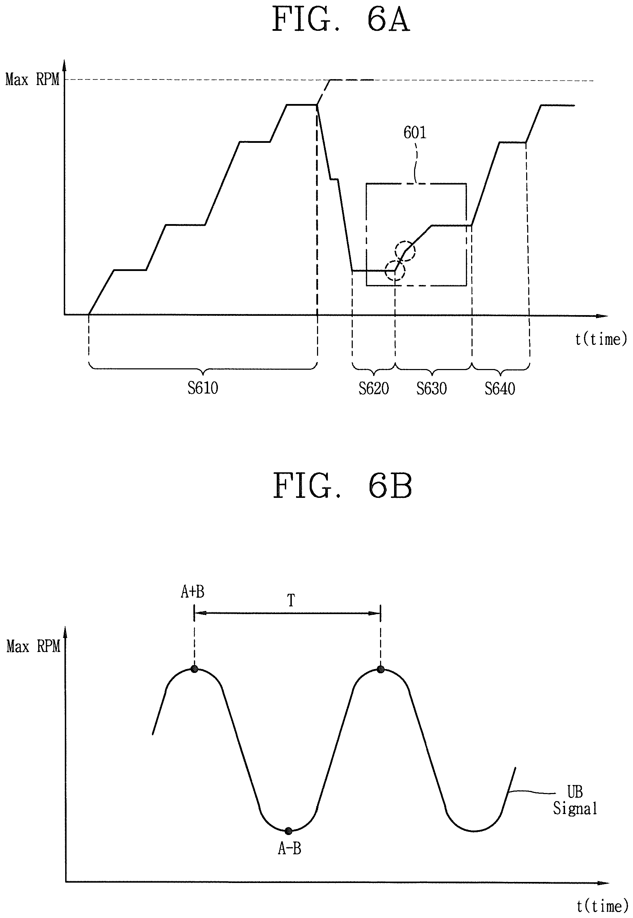

FIG. 6A illustrates a graph related to a rotation speed of the drum in a spin-dry operation of the washing machine.

Referring to FIG. 6A, the washing machine 100 may perform a first spin-dry operation (S610). In order to perform the first spin-dry operation (S610), the controller of the washing machine 100 may gradually increase a rotation speed of the drum 30 as illustrated in FIG. 5.

When the rotation speed of the drum 30 reaches a first speed value, the controller of the washing machine 100 may compare an output value of a vibration sensor installed in a portion of the drum 30 with a first reference vibration value.

When the output value of the vibration sensor is smaller than the first reference vibration value, the controller may increase the rotation speed of the drum 30 to a previously determined maximum speed to complete the first spin-dry operation (S610).

When the output value of the vibration sensor is greater than the first reference vibration value, the controller may reduce the rotation speed of the drum 30 to reduce an unbalanced mass of the drum 30.

Also, when the output value of the vibration sensor is greater than a second reference vibration value, the controller may stop the drum 30 and resume a spin-dry operation. The second reference vibration value is set to be greater than the first reference vibration value. In this manner, in cases where vibrations are too strong to perform ball controlling, the controller may stop the drum 30 and subsequently resume the spin-dry operation to enhance stability of the washing machine.

In detail, when an output value of the vibration sensor is greater than the first reference vibration value, the controller may reduce the rotation speed from the first speed value to the second speed value.

Also, while maintaining the rotation speed of the drum at the second speed value, the controller may obtain a signal related to vibration of the drum from the vibration sensor during the preset time interval.

Referring to FIG. 6A, while performing the first spin-dry operation S610 in the washing machine 100, the controller may compare an output value of the vibration sensor with the first reference vibration value in a section in which the rotation speed of the drum 30 reaches the first speed value and is maintained.

As illustrated in FIG. 6A, in a state in which the rotation speed of the drum 30 is maintained at the first speed value, when the output value of the vibration sensor is greater than the first reference vibration value, the controller may perform an eccentricity detection operation (S620) to detect information related to an eccentric amount of the drum 30 and a ball position of the ball balancer 7 0.

That is, in a state in which the rotation speed is maintained at the first speed value, when the output value of the vibration sensor is greater than the first reference vibration value, the controller may reduce the rotation speed of the drum 30 to the second speed value smaller than the first speed value.

Also, after the rotation speed of the drum 30 is reduced to the second speed value, the controller may maintain a rotation speed of the drum 30 for a preset period of time.

For example, the preset period of time may be 30 seconds. In another example, the preset period of time may correspond to a rotation period of the drum 30 or may correspond to a multiple of the rotation period.

Also, after the rotation speed of the drum 30 is reduced, the controller may obtain a signal related to vibration of the drum from the vibration sensor, while maintaining the reduced rotation speed for a preset period of time.

In this manner, after the controller reduces the rotation speed of the drum 30, the process of obtaining a signal related to vibration of the drum 30 from the vibration sensor to detect information related to an eccentric amount of the drum 30 and a ball position of the ball balancer 70, while maintaining the reduced rotation speed for a preset period of time, is defined as an eccentricity detection operation (S620).

For example, the rotation speed of the drum 30 in the eccentricity detection operation S620 may correspond to a rotation speed of the drum 30 when a rotation speed of the drum 30 is first constantly maintained in the first spin-dry operation S610.

Referring to FIG. 6B, the signal (UB signal) related to vibration of the drum 30 in the eccentricity detection operation S620 may be formed as a sine wave.

Meanwhile, the sine wave illustrated in FIG. 6B may be a signal related to vibration of the drum generated by at least one of the first ball balancer B1 disposed in a front portion of the drum 30, the second ball balancer B2 disposed in a middle portion, and a third ball balancer B3 disposed in a rear portion of the drum 30.

As illustrated in FIG. 6B, a signal related to vibration of the drum 30 obtained in a state in which a rotation speed of the drum 30 is maintained at the second speed value may be formed as a sine wave.

Thus, the controller may detect information related to a maximum value (A+B) and a minimum value (A-B) from the obtained signal related to vibration of the drum, a phase of the signal, and a period (T) of the signal.

In addition, referring to FIG. 4A described above, a timing at which the maximum value (A+B) is obtained may correspond to a timing at which the ball 401 is positioned in a direction in which the washing target is lopsided. That is, the signal may reach the maximum value (A+B) at a timing at which the ball 401 is positioned in a direction in which an unbalanced mass (UB) is formed.

Also, referring to FIG. 4B, a timing at which the minimum value (A-B) is obtained may correspond to a timing at which the ball 401 is positioned in a direction opposite to a direction in which the washing target is lopsided. That is, at a timing at which the ball 401 is positioned in the direction opposite to the direction in which the unbalanced mass (UB) is formed, the signal may reach the minimum value (A-B).

Thus, on the basis of the information related to the detected maximum value (A+B) and the minimum value (A-B) and the period (T) of the signal, the controller may detect information related to an eccentric amount of the drum 30 and a position of the ball.

In detail, the maximum value (A+B) of the signal related to vibration of the drum 30 may be formed by adding a load (A) based on the unbalanced mass and a load (B) based on the ball, and the minimum value (A-B) may be formed by subtracting the load (A) based on the unbalanced mass and the load (B) based on the ball. Thus, the controller may detect information related to an eccentric amount of the drum 30 by calculating an average value of the maximum value and the minimum value.

Also, on the basis of a phase of the detected signal, the controller may detect information related to a relative position of the ball rotating along an outer circumferential surface of the drum 30 regarding a position in which the unbalanced mass is formed.

That is, on the basis of a phase of the sine wave, the controller may detect information related to the relative position of the ball with respect to the eccentric direction of the washing target within the drum.

In this manner, the controller may analyze the sine wave obtained during the eccentricity detection operation S620 to detect an eccentric amount of the drum 30 and the relative position of the ball with respect to the eccentric direction. Hereinafter, a method of determining an acceleration pattern of the drum 30 by the controller on the basis of the detected eccentric amount and the relative position of the ball will be described.

As illustrated in FIG. 6A, when the eccentricity detection operation S620 is completed, the controller may perform a call control operation (S630) to select an acceleration pattern corresponding to the detected eccentric amount and the position of the ball from a preset table and rotate the drum according to the selected acceleration pattern.

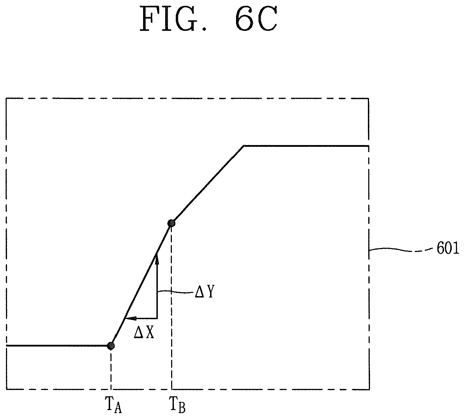

In detail, as illustrated in FIG. 6C, the acceleration pattern selected by the controller may be related to at least one of a timing (TA) at which acceleration of the drum 30 starts, acceleration (ΔY/ΔX) of the drum 30, and a timing (TB) at which acceleration of the drum 30 is changed.

The controller may rotate the drum according to the selected acceleration pattern such that the ball 71 is positioned in a direction opposite to the eccentric direction of the washing target within the drum 30.

Referring to FIG. 6A, when the ball control operation (S630) is completed, the controller may perform a second spin-dry operation (S640). After controlling a rotation speed of the drum 30 according to the acceleration pattern selected to control a position of the ball, the controller may resume the spin-dry operation.

Rotation speeds of the drum 30 uniformly maintained at the eccentricity detection operation (S620), the ball control operation (S630), and the second spin-dry operation (S640), respectively, may corresponding to the first RPM (RPM 1), the second RPM (RPM 2), and the third RPM (RPM 3) illustrated in FIG. 5, respectively.

Although not shown in FIGS. 6A to 6C, when a size of the eccentric amount detected in the eccentricity detection operation (S620) is greater than a reference eccentric amount, the controller may stop the drum 30.

Also, when the size of the eccentric amount detected in the eccentricity detection operation (S620) is greater than the reference eccentric amount, the controller may stop the drum 30 and control a rotation speed of the drum 30 to perform a laundry distribution operation to distribute the washing target within the drum 30.

Also, when the laundry distribution operation terminates, the controller may control the rotation speed of the drum to perform the spin-dry operation again.

Meanwhile, the preset table may be data accumulated through experiment. The preset table may be stored as default in the washing machine 100.

Also, while rotating the drum 30 according to a preset pattern, the controller of the washing machine 100 may detect information related to an eccentric amount of the unbalanced mass and a relative position of the ball regarding an eccentric direction, and update the table according to the detected information.

In an embodiment, each time the washing machine 100 is turned on and off, the controller, while rotating the drum 30 according to a preset pattern, may detect information related to an eccentric amount of the unbalanced mass and a relative position of the ball regarding an eccentric direction, and update the table according to the detected information.

In another embodiment, when power of the washing machine 100 is first turned on, the controller, while rotating the drum 30 according to a preset pattern, may detect information related to an eccentric amount of the unbalanced mass and a relative position of the ball regarding an eccentric direction, and update the table according to the detected information.

In another embodiment, when a user input is applied, the controller, while rotating the drum 30 according to a preset pattern, may detect information related to an eccentric amount of the unbalanced mass and a relative position of the ball regarding an eccentric direction, and update the table according to the detected information.

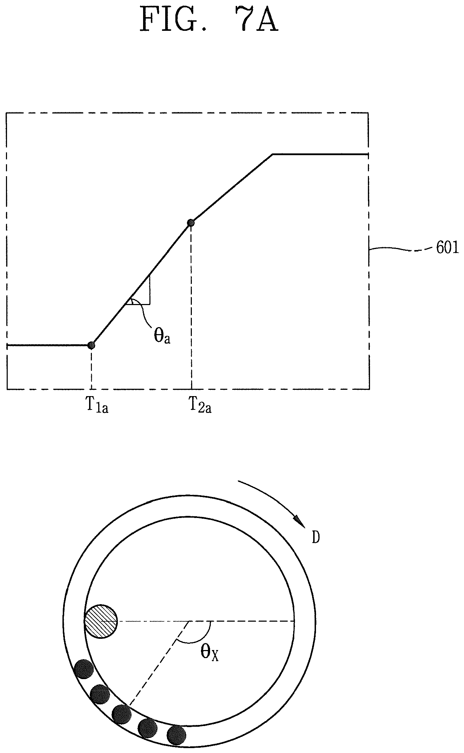

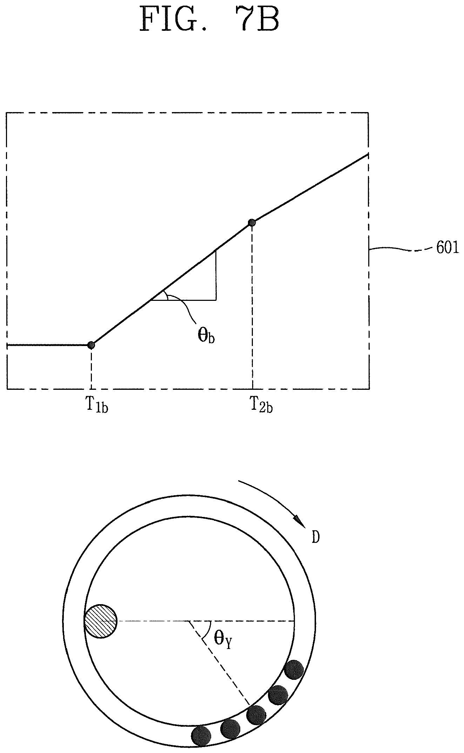

Hereinafter, a graph illustrating a method for controlling a rotation speed of the drum to control a position of a ball according to a relative position of the ball regarding an unbalanced mass of the drum during a spin-dry operation of the washing machine according to the present disclosure will be described with reference to FIGS. 7A and 7B.

Referring to FIG. 7A, the controller of the washing machine 100 may substitute a size of an unbalanced mass (UB) calculated in the eccentricity detection operation (S620), a direction in which the unbalanced mass (UB) is formed with respect to the center of the drum 30, and an angle formed by a direction of the ball, to a preset table to select an acceleration pattern of the drum 30.

As illustrated in FIG. 7A, when a size of the unbalanced mass (UB) is calculated as X, the controller may start acceleration when an angle formed by a direction opposite to the direction in which the unbalanced mass (UB) is formed with respect to the center of the drum 30 and the direction of the ball is θx.

That is, at a timing (T1a) at which the controller starts to accelerate the drum 30, an angle formed by the direction opposite to the direction in which the unbalanced mass (UB) is formed with respect to the center of the drum 30 and the direction of the ball may be θx.

Also, the controller may accelerate a rotation speed of the drum to a first value θa, starting from the timing T1a at which the drum accelerates. Also, the controller may reduce the rotation acceleration of the drum 30 at a timing T2a at which acceleration of the drum 30 is changed.

In this manner, the controller may determine an acceleration pattern of the drum 30 on the basis of the size of the unbalanced mass (UB) calculated from the preset table and the relative position of the ball with respect to the direction in which the unbalanced mass is eccentric.

As illustrated in FIG. 7A, the acceleration pattern of the drum 30 may include a timing (T1a) at which the drum 30 starts to accelerate, the rotation acceleration of the drum 30, and the timing T2a at which acceleration of the drum 30 changes.

The controller may select an acceleration pattern of the drum 30 by substituting the calculated size of the unbalanced mass (UB) and the angle formed by the direction in which the unbalanced mass (UB) is formed with respect to the center of the drum 30 and the direction of the ball to a preset table.

That is, a data structure included in the preset table may include parameters related to the eccentric amount within the drum 30, the relative position of the ball with respect to the eccentric direction , and the acceleration pattern of the drum 30.

For example, the parameter related to the eccentric amount may correspond to the calculated size of the unbalanced mass (UB). In another example, the parameter related to the relative position of the ball with respect to the eccentric direction may correspond to an angle formed by the direction in which the unbalanced mass (UB) with respect to the center of the drum 30 and the direction of the ball.

When FIGS. 7A and 7B are compared, in cases where the sizes of the unbalanced mass (UB) calculated in the eccentricity detection operation (S620) are different, the controller may control a rotation speed of the drum 30 on the basis of a different acceleration pattern.

In detail, the controller may classify angles formed by the direction in which the unbalanced mass (UB) is lopsided and the direction of the ball at a timing at which the eccentricity detection operation S620 starts, into a plurality of groups. The controller may determine an acceleration pattern of the drum 30 from the preset table on the basis of the classified groups.

For example, the plurality of groups may include a first group corresponding to a range from 0° to 60°, a second group corresponding to a range from 60° to 120°, a third group corresponding to a range from 120° to 180°, a fourth group corresponding to a range from 180° to 240°, a fifth group corresponding to a range from 240° to 300°, and a sixth group corresponding to a range from 300° to 360°.

For example, the preset table may be formed as illustrated in Table 1.

**[Table 1]**

| UB size | Acceleration slope | Angle | Point of inflection (RPM) |
|---|---|---|---|
| 0∼200g | 18.5 rpm/s | 90° | 290rpm |
| 200∼400g | 18.5 rpm/s | 36° | 247rpm |
| 400g or greater | 18.7 rpm/s | 36° | 240rpm |

Referring to Table 1, when a size of the unbalanced mass (UB) increases, the controller may increase a rotation speed of the drum so as to be faster. That is, the controller may increase the acceleration slope of the drum as the unbalanced mass is increased.

Also, referring to Table 1, when the size of the unbalanced mass (UB) increases, the controller may change the acceleration slope of the drum at a small RPM. That is, when the size of the unbalanced mass (UB) increases, the controller may lower an acceleration point of inflection of the drum.

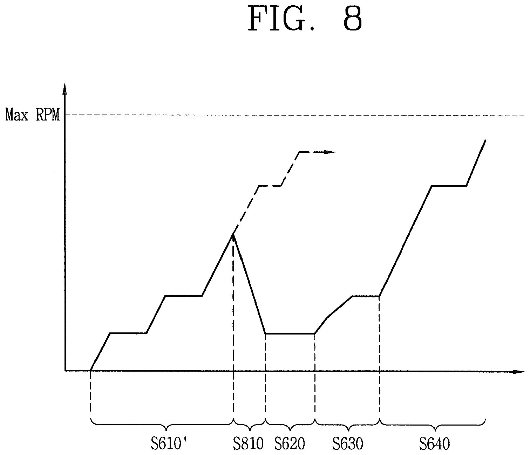

Meanwhile, referring to FIG. 8, the controller may detect a rotation speed of the drum 30 and a vibration value sensed by the vibration sensor at a plurality of timings during a spin-dry operation (S610'). The controller may calculate a variation rate of the vibration values regarding the rotation speed using the detected rotation speed and vibration value, and control the rotation speed of the drum 30 on the basis of the calculated variation rate.

That is, the controller may calculate a variation rate of an output value of the vibration sensor regarding the rotation speed of the drum 30, and accordingly, the controller may estimate the output value when the rotation speed of the drum 30 is a maximum speed.

Thus, when the calculated variation rate exceeds a reference variation rate value, the controller may reduce (S810) the rotation speed of the drum 30 to perform the eccentricity detection operation (S620) of detecting an eccentric amount within the drum 30.

As illustrated in FIG. 8 , although the rotation speed of the drum 30 does not reach a first speed value, if an output value of the vibration sensor rapidly increases, the controller may reduce the rotation speed of the drum 30 to a second speed value to perform the eccentricity detection operation (S620).

When the calculated variation rate exceeds the reference variation rate value, the controller may reduce the rotation speed of the drum and detect information related to an eccentric amount within the drum 30 and a position related to the ball.

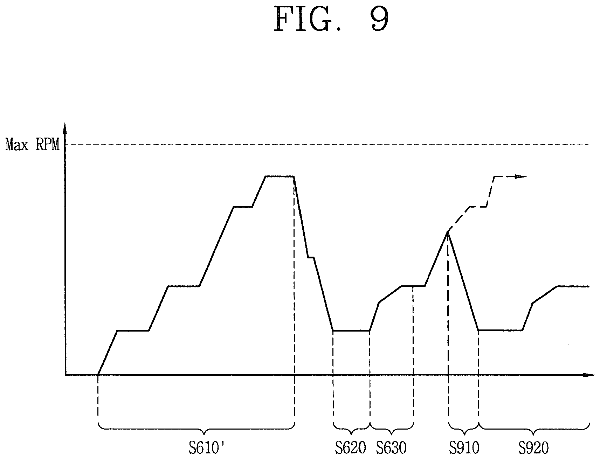

Referring to FIG. 9, even after the eccentricity detection operation (S620) and the ball control operation (S630) are performed, the controller may perform the eccentricity detection operation and the ball control operation repeatedly on the basis of an output value of the vibration sensor (S920).

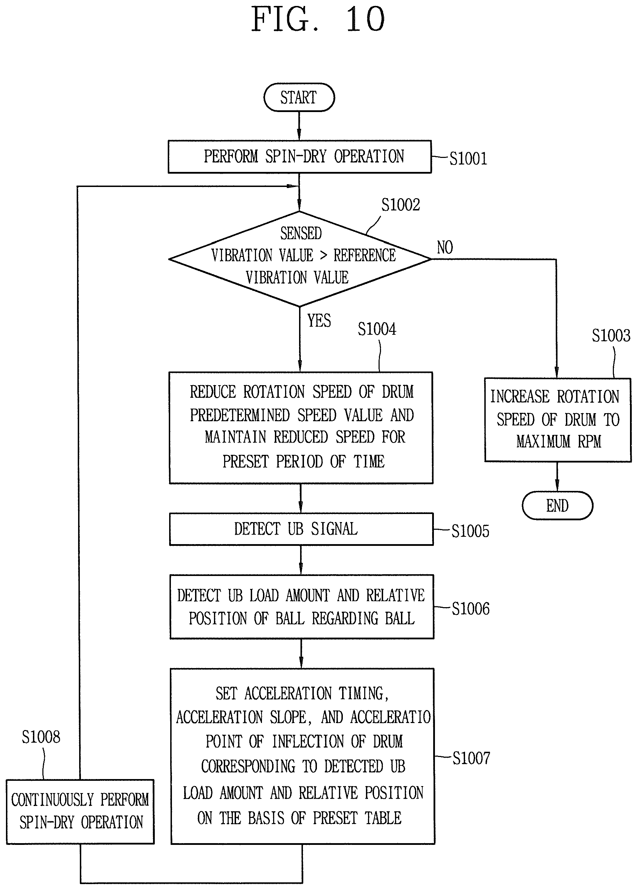

An embodiment of a method for controlling a washing machine according to the present disclosure will be described with reference to FIG. 10.

The washing machine 100 may perform a spin-dry operation (S1001). The controller of the washing machine 100 may detect an output of the vibration sensor, while gradually increasing a rotation speed of the drum 30.

The controller of the washing machine 100 may compare a vibration value sensed by the vibration sensor with a reference vibration value during the spin-dry operation (S1002).

In detail, when the rotation speed of the drum reaches a first speed value, the controller may determine whether the sensed output from the vibration sensor exceeds the reference vibration value.

When the sensed vibration value is equal to or smaller than the reference vibration value, the controller may increase the rotation speed of the drum 30 to a maximum RPM (S1003).

Meanwhile, when the sensed vibration value exceeds the reference vibration value, the controller may reduce the rotation speed of the drum to a second speed value.

Also, the controller may detect a signal related to an unbalanced mass (or unbalance mass) (UB) using the vibration sensor (S1005).

That is, while maintaining the rotation speed of the drum 30 at the second speed value, the controller may obtain a signal related to vibration of the drum 30 from the vibration sensor for a preset period of time. That is, the signal related to the unbalanced mass (UB) may correspond to a signal related to vibration of the drum 30.

Thereafter, on the basis of the detected signal related to the unbalanced mass (UB), the controller may detect a load of the unbalanced mass (UB) and a relative position of a ball regarding the load (S1006).

Also, on the basis of a preset table, the controller may set an acceleration timing, an acceleration slope, and an acceleration point of inflection of the drum corresponding to the detected load of the unbalanced mass (UB) and the detected relative position (S1007).

When the ball control operation is completed, the controller may resume the spin-dry operation (S1008).

As described above, in the washing machine according to the present disclosure, since a relative position of the ball within the ball balancer regarding an unbalanced mass of the drum is detected, a position of the ball may be adjusted, and thus, a lopsided phenomenon of laundry within the drum may be complemented.

That is, when a speed of the drum is increased to a maximum rotation speed in the washing machine, the rotation speed of the drum may be approached to the maximum rotation speed, while reducing vibration of the drum.

In particular, in the present disclosure, since a position of the ball within the ball balancer is adjusted to an optimal position to compensate for an unbalanced mass formed within the drum, vibrations due to rotation of the drum may be reduced. Also, when vibrations due to rotation of the drum are reduced, noise of the washing machine may also be reduced.

In addition, in the present disclosure, without adding a separate sensor or a separate device for adjusting a position of the ball within the ball balancer, the ball freely moving within the ball balancer may be moved to a direction opposite to a direction in which laundry is lopsided. Thus, noise of the washing machine may be reduced, even without incurring cost or changing a structure.

Also, in the present disclosure, since an operation for adjusting a position of the ball is performed a plurality of times using experimental data, a case in which the ball deviates from a theoretical position against an intention of a user of the washing machine may be minimized.

Also, in the present disclosure, since the unbalanced mass formed within the drum is compensated, vibration of the drum may be reduced to reduce noise, and since damage to several components connected to the drum or the tub of the washing machine is minimized, lifespan of components provided in the washing machine may be increased.

Also, in the present disclosure, even without deforming design to reduce a maximum rotation speed of the drum, vibration of the drum may be reduced to reduce noise.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

## Claims

1. A washing machine comprising:
a drum (30);
a vibration sensor (P) sensing vibration of the drum;
a ball balancer (70) installed in a portion of the drum and including at least one bail; and
a controller controlling a rotation speed of the drum,
**characterized in that**:
the controller detects information related to an eccentric amount within the drum and a position of the ball using a signal related to vibration of the drum obtained from the vibration sensor for a preset period of time, while maintaining a rotation speed of the drum, selects an acceleration pattern corresponding to the detected eccentric amount and position of the ball from a preset table, and rotates the drum according to the selected acceleration pattern,
wherein the controller is configured to increase a rotation speed of the drum according to the selected acceleration pattern such that the ball is positioned in a direction opposite to an eccentric direction of a washing target within the drum, and
the preset table is stored in the washing machine.

2. The washing machine of claim 1, wherein the selected acceleration pattern relates to at least one of a timing at which the drum starts to accelerate, acceleration of the drum, and a timing at which acceleration of the drum is changed.

3. The washing machine of claim 1, or 2, wherein the signal related to vibration of the drum is formed as a sine wave.

4. The washing machine of claim 3, wherein the controller detects information related an eccentric amount using an average value of a maximum value and a minimum value of the sine wave.

5. The washing machine of claim 3, wherein the controller detects information related to a relative position of the ball regarding an eccentric direction of the washing target within the drum on the basis of a phase of the sine wave.

6. The washing machine of claim 4, wherein when the detected eccentric amount is greater than a reference eccentric amount, the controller stops the drum.

7. The washing machine of claim 6, wherein after the drum is stopped the controller controls a rotation speed of the drum to perform a laundry distribution operation to distribute washing target within the drum.

8. The washing machine of claim 7, wherein when the laundry distribution operation terminates, the controller controls a rotation speed of the drum to perform a spin-dry operation.

9. The washing machine of any one of claims 1 to 8, wherein after the spin-dry operation starts, when a rotation speed of the drum reaches a first speed value, the controller compares a vibration value sensed by the vibration sensor with a first reference vibration value, and when the sensed vibration value is smaller than the reference vibration value, the controller increases the rotation speed of the drum to a maximum speed.

10. The washing machine of claim 9, wherein when the sensed vibration value is equal to or greater than the first vibration value, the controller reduces the rotation speed of the drum from the first speed value to a second speed value, and obtains a signal related to vibration of the drum from the vibration sensor for a preset period of time, while maintaining the rotation speed of the drum at the second speed value.

11. The washing machine of claim 9, wherein when the sensed vibration value is equal to or greater than a second vibration value, the controller stops the drum and resume the spin-dry operation.

12. The washing machine of claim 11, wherein the second reference vibration is greater than the first reference vibration value.

13. The washing machine of any one of claims 1 to 12, wherein the controller detects a rotation speed of the drum and a vibration value sensed by the vibration sensor at a plurality of timings during a spin-dry operation, calculates a variation rate of the vibration value regarding the rotation speed using the detected rotation speed and vibration value, and controls a rotation speed of the drum on the basis of the calculated variation rate.

14. The washing machine of claim 13, wherein when the calculated variation rate exceeds a reference variation value, the controller reduces a rotation speed of the drum to detect an eccentric amount within the drum.

## Patentansprüche

1. Waschmaschine mit:
einer Trommel (30);
einem Schwingungssensor (P), der eine Schwingung der Trommel abtastet;
einer Kugelausgleichseinrichtung (70), die in einem Abschnitt der Trommel eingebaut ist und mindestens eine Kugel aufweist; und
eine Steuereinrichtung, die eine Drehzahl der Trommel steuert,
**dadurch gekennzeichnet, dass**:
die Steuereinrichtung Informationen, die einen Exzentrizitätsbetrag in der Trommel und eine Position der Kugel betreffen, mittels eines Signals ermittelt, das eine Schwingung der Trommel betrifft, das vom Schwingungssensor für eine voreingestellte Zeitspanne erhalten wird, während eine Drehzahl der Trommel aufrechterhalten wird, ein Beschleunigungsmuster, das dem ermittelten Exzentrizitätsbetrag und der Position der Kugel entspricht, aus einer voreingestellten Tabelle auswählt und die Trommel gemäß dem ausgewählten Beschleunigungsmuster dreht,
wobei die Steuereinrichtung konfiguriert ist, eine Drehzahl der Trommel gemäß dem ausgewählten Beschleunigungsmuster zu erhöhen, so dass die Kugel in eine Richtung angeordnet wird, die zu einer Exzentrizitätsrichtung eines Waschobjekts in der Trommel entgegengesetzt ist, und
die voreingestellte Tabelle in der Waschmaschine gespeichert ist.

2. Waschmaschine nach Anspruch 1, wobei das ausgewählte Beschleunigungsmuster einen Zeitpunkt, zu dem die Trommel beginnt zu beschleunigen, und/oder die Beschleunigung der Trommel und/oder einen Zeitpunkt betrifft, an dem die Beschleunigung der Trommel geändert wird.

3. Waschmaschine nach Anspruch 1 oder 2, wobei das Signal, das eine Schwingung der Trommel betrifft, als eine Sinuswelle ausgebildet ist.

4. Waschmaschine nach Anspruch 3, wobei die Steuereinrichtung Informationen, die einen Exzentrizitätsbetrag betreffen, mittels eines Durchschnittswerts eines Maximalwerts und eines Minimalwerts der Sinuswelle ermittelt.

5. Waschmaschine nach Anspruch 3, wobei die Steuereinrichtung Informationen, die eine relative Position der Kugel hinsichtlich einer Exzentrizitätsrichtung des Waschobjekts in der Trommel betreffen, auf der Grundlage einer Phase der Sinuswelle ermittelt.

6. Waschmaschine nach Anspruch 4, wobei wenn der ermittelte Exzentrizitätsbetrag größer als ein Bezugsexzentrizitätsbetrag ist, die Steuereinrichtung die Trommel stoppt.

7. Waschmaschine nach Anspruch 6, wobei nachdem die Trommel gestoppt ist, die Steuereinrichtung eine Drehzahl der Trommel steuert, um einen Wäscheverteilungsvorgang durchzuführen, um Waschobjekte in der Trommel zu verteilen.

8. Waschmaschine nach Anspruch 7, wobei wenn der Wäscheverteilungsvorgang endet, die Steuereinrichtung eine Drehzahl der Trommel steuert, um einen Trockenschleudervorgang durchzuführen.

9. Waschmaschine nach einem der Ansprüche 1 bis 8, wobei nachdem der Trockenschleudervorgang startet, wenn eine Drehzahl der Trommel einen ersten Drehzahlwert erreicht, die Steuereinrichtung eine durch den Schwingungssensor abgetasteten Schwingungswert mit einem ersten Bezugsschwingungswert vergleicht, und wenn der abgetastete Schwingungswert kleiner als der Bezugsschwingungswert ist, die Steuereinrichtung die Drehzahl der Trommel auf eine Maximaldrehzahl erhöht.

10. Waschmaschine nach Anspruch 9, wobei wenn der abgetastete Schwingungswert gleich oder größer als der erste Schwingungswert ist, die Steuereinrichtung die Drehzahl der Trommel vom ersten Drehzahlwert auf einen zweiten Drehzahlwert reduziert und ein Signal, das eine Schwingung der Trommel betrifft, vom Schwingungssensor für eine voreingestellte Zeitspanne erhält, während die Drehzahl der Trommel auf dem zweiten Drehzahlwert gehalten wird.

11. Waschmaschine nach Anspruch 9, wobei wenn der abgetastete Schwingungswert gleich oder größer als ein zweiter Schwingungswert ist, die Steuereinrichtung die Trommel stoppt und den Trockenschleudervorgang fortsetzt.

12. Waschmaschine nach Anspruch 11, wobei der zweite Bezugsschwingungswert größer als der erste Bezugsschwingungswert ist.

13. Waschmaschine nach einem der Ansprüche 1 bis 12, wobei die Steuereinrichtung eine Drehzahl der Trommel und einen durch den Schwingungssensor abgetasteten Schwingungswert zu einer Vielzahl von Zeitpunkten während eines Trockenschleudervorgangs ermittelt, eine Variationsrate des Schwingungswerts hinsichtlich der Drehzahl mittels der ermittelten Drehzahl und des Schwingungswerts berechnet, und eine Drehzahl der Trommel auf der Grundlage der berechneten Variationsrate steuert.

14. Waschmaschine nach Anspruch 13, wobei wenn die berechnete Variationsrate einen Bezugsvariationswert überschreitet, die Steuereinrichtung eine Drehzahl der Trommel reduziert, um einen Exzentrizitätsbetrag in der Trommel zu ermitteln.

## Revendications

1. Machine à laver, comprenant :
un tambour (30) ;
un capteur de vibrations (P) détectant les vibrations du tambour ;
un dispositif d'équilibrage à billes (70) monté dans une partie du tambour et comprenant au moins une bille ; et
un dispositif de commande commandant la vitesse de rotation du tambour,
**caractérisée en ce que** :
le dispositif de commande détecte des informations relatives à une valeur d'excentricité à l'intérieur du tambour et une position de la bille au moyen d'un signal relatifs aux vibrations du tambour reçu du capteur de vibrations pendant une durée définie, en maintenant une vitesse de rotation du tambour, sélectionne dans une table définie un modèle d'accélération correspondant à la valeur d'excentricité détectée et à la position de la bille, et entraîne le tambour en rotation en fonction du modèle d'accélération sélectionné,
le dispositif de commande étant prévu pour augmenter la vitesse de rotation du tambour en fonction du modèle d'accélération sélectionné, de manière à positionner la bille dans une direction opposée à la direction d'excentricité d'une cible de lavage à l'intérieur du tambour, et
la table définie étant mémorisée dans la machine à laver.

2. Machine à laver selon la revendication 1, où le modèle d'accélération sélectionné est relatif à un moment où le tambour commence à accélérer et/ou à l'accélération du tambour et/ou à un moment où l'accélération du tambour est modifiée.

3. Machine à laver selon la revendication 1 ou la revendication 2, où le signal relatif aux vibrations du tambour est en forme d'onde sinusoïdale.

4. Machine à laver selon la revendication 3, où le dispositif de commande détecte des informations relatives à une valeur d'excentricité au moyen d'une valeur moyenne entre une valeur maximale et une valeur minimale de l'onde sinusoïdale.

5. Machine à laver selon la revendication 3, où le dispositif de commande détecte des informations relatives à une position relative de la bille par rapport à une direction d'excentricité de la cible de lavage à l'intérieur du tambour sur la base d'une phase de l'onde sinusoïdale.

6. Machine à laver selon la revendication 4, où le dispositif de commande arrête le tambour si la valeur d'excentricité détectée est supérieure à une valeur d'excentricité de référence.

7. Machine à laver selon la revendication 6, où, après arrêt du tambour, le dispositif de commande règle une vitesse de rotation du tambour afin d'effectuer une opération de répartition du linge pour répartir la cible de lavage à l'intérieur du tambour.

8. Machine à laver selon la revendication 7, où, à l'issue de l'opération de répartition du linge, le dispositif de commande règle une vitesse de rotation du tambour afin d'effectuer une opération d'essorage.

9. Machine à laver selon l'une des revendications 1 à 8, où, une fois l'opération d'essorage lancée, si une vitesse de rotation du tambour atteint une première valeur de vitesse, le dispositif de commande compare une valeur de vibrations détectée par le capteur de vibrations avec une première valeur de vibrations de référence, et, si la valeur de vibrations détectée est inférieure à la valeur de vibrations de référence, le dispositif de commande augmente la vitesse de rotation du tambour vers une vitesse maximale.

10. Machine à laver selon la revendication 9, où, si la valeur de vibrations détectée est égale ou supérieure à la première valeur de vibrations, le dispositif de commande diminue la vitesse de rotation du tambour de la première valeur de vitesse vers une deuxième valeur de vitesse, et reçoit un signal relatif aux vibrations du tambour du capteur de vibrations pendant une durée définie, en maintenant la vitesse de rotation du tambour à la deuxième valeur de vitesse.

11. Machine à laver selon la revendication 9, où, si la valeur de vibrations détectée est égale ou supérieure à une deuxième valeur de vibrations, le dispositif de commande arrête le tambour et reprend l'opération d'essorage.

12. Machine à laver selon la revendication 11, où la deuxième valeur de vibrations de référence est supérieure à la première valeur de vibrations de référence.

13. Machine à laver selon l'une des revendications 1 à 12, où le dispositif de commande détecte une vitesse de rotation du tambour et une valeur de vibrations détectée par le capteur de vibrations à plusieurs moments pendant une opération d'essorage, calcule un taux de variation de la valeur de vibrations par rapport à la vitesse de rotation au moyen de la vitesse de rotation et de la valeur de vibration détectées, et règle une vitesse de rotation du tambour sur la base du taux de variation calculé.

14. Machine à laver selon la revendication 13, où, si le taux de variation calculé dépasse une valeur de variation de référence, le dispositif de commande diminue la vitesse de rotation du tambour pour détecter une valeur d'excentricité à l'intérieur du tambour.
